# EUROPÄISCHE PATENTSCHRIFT

(11) **EP 3 513 698 B1**
(45) Veröffentlichungstag und Bekanntmachung des Hinweises auf die Patenterteilung: **13.07.2022**
(21) Anmeldenummer: 18152116.2
(22) Anmeldetag: 17.01.2018
(51) Int. Cl.: A47J 43/046, A47J 27/00, H05B 1/02

(54) **VERFAHREN ZUM BETREIBEN EINES HEIZELEMENTS**
METHOD FOR OPERATING A HEATING ELEMENT
PROCÉDÉ DE FONCTIONNEMENT D'UN ÉLÉMENT CHAUFFANT

(43) Veröffentlichungstag der Anmeldung: 24.07.2019
(73) Patentinhaber: Vorwerk & Co. Interholding GmbH, 42270 Wuppertal (DE)
(72) Erfinder: Spitthöver, Christoph, 42117 Wuppertal (DE); Lang, Torsten, 42657 Solingen (DE)
(74) Vertreter: Bals & Vogel Patentanwälte PartGmbB

(56) Entgegenhaltungen:
- WO-A1-2008/046852
- DE-A1-102015 101 299
- DE-U1-202006 020 208
- US-A- 3 789 190

## Beschreibung

Die vorliegende Erfindung betrifft ein Verfahren zum Betreiben eines Heizelements, insbesondere einer Küchenmaschine. Ferner bezieht sich die Erfindung auf eine Küchenmaschine mit einem Heizsystem sowie ein Computerprogrammprodukt zum Betreiben des Heizelements.

Es ist bei Küchenmaschinen bekannt, zur Erhitzung eines Mediums Heizsysteme einzusetzen. Hierbei wird häufig eine Temperatur vorgegeben, auf welche das Medium erhitzt werden soll, z. B. automatisiert oder eingestellt durch einen Benutzer der Küchenmaschine. Um nun ein Heizelement des Heizsystems so zu betreiben, dass diese Temperatur erreicht und erhalten wird, kann herkömmlicherweise eine Heiz-, und insbesondere Temperaturregelung durchgeführt werden, welche zur Regelung (als Regelgröße) eine Messung eines separaten Temperatursensors, wie eines NTC-Widerstands, nutzt.

In der Schrift DE 20 2006 020 208 U1 ist eine Messvorrichtung zur Erfassung eines temperaturabhängigen Widerstands eines elektrischen Heizelements offenbart.

Nachteilhaft bei den bekannten Lösungen zum Betrieb eines Heizelements, insbesondere zur Heizregelung, ist, dass die Temperatur nicht zuverlässig gehalten werden kann. So kann es vorkommen, dass durch ein inhomogenes Medium (z. B. bei unterschiedlichen Lebensmitteln als Medium) es zu einer lokalen Temperaturveränderung bei dem Heizelement kommt. Diese sogenannten Hotspots am Heizelement können zu einem Verbrennen des Mediums an diesen Stellen führen.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Heizregelung ohne aufwendige Messsensoren bzw. Messsensorik bereitzustellen.

Die voranstehende Aufgabe wird gelöst durch ein Verfahren mit den Merkmalen des unabhängigen Verfahrensanspruchs, durch eine Küchenmaschine mit den Merkmalen des weiteren nebengeordneten Vorrichtungsanspruchs, sowie durch ein Computerprogrammprodukt mit den Merkmalen des entsprechenden weiteren nebengeordneten Vorrichtungsanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Küchenmaschine sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zum Betreiben eines Heizelements, wie einer Heizung, insbesondere bei einer Küchenmaschine oder eines Küchengeräts (wie z. B. Wasserkocher, Ofen oder Herd etc.) zur zumindest teilweise automatischen Zubereitung von Lebensmitteln.

Bei dem erfindungsgemäßen Verfahren werden die nachfolgenden Schritte durchgeführt:
a) Erfassen eines elektrischen Widerstands des Heizelements, sodass wenigstens ein Widerstandswert ermittelt wird,
b) Durchführen eines Heizbetriebs bei dem Heizelement anhand des wenigstens einen ermittelten Widerstandswertes, wobei hierzu vorzugsweise der wenigstens eine ermittelte Widerstandswert durch eine Auswertevorrichtung ausgewertet wird, und insbesondere eine Temperatur des Heizelements anhand des wenigstens einen ermittelten Widerstandswertes bestimmt wird, um den Heizbetrieb in Abhängigkeit von der Temperatur durchzuführen.

In anderen Worten kann der (aktuell) ermittelte Widerstandswert, welcher für den elektrischen Widerstand *(kurz nur Widerstand genannt)* des Heizelements spezifisch ist, (vorzugsweise direkt) als Grundlage für den temperaturabhängigen Heizbetrieb dienen. Dieser Heizbetrieb ist somit insbesondere als Regelung (nachfolgend auch: Heizregelung, Temperaturregelung) zu verstehen, bei welcher die Temperatur des Heizelements und damit der (aktuell vorhandene) Widerstand, welcher für die (jeweilige) Temperatur spezifisch ist, als Regelgröße dient. Bspw. kann hierzu der Widerstandswert ausgewertet (und ggf. auch verarbeitet) werden, vorzugsweise mit einem Sollwert für die Temperatur bzw. den Widerstand verglichen werden, um durch den Vergleich eine Regeldifferenz zu bestimmen. Somit kann auf einen zusätzlichen Temperatursensor bei dem erfindungsgemäßen Verfahren verzichtet werden. Vorzugsweise kann ein (elektronischer) Regler zur Regelung genutzt werden, um diesen Heizbetrieb zu ermöglichen. Für den Heizbetrieb kann eine Energiequelle, wie eine Wechselspannungsquelle, zur Energieübertragung an das Heizelement genutzt werden, um einen elektrischen Stromfluss durch das Heizelement (zur Wärmeerzeugung und Erhitzung des Mediums) zu bewirken. Bspw. erfolgt dabei der Heizbetrieb getaktet und/oder gemäß einer Schaltfrequenz, mit welcher eine Energieübertragung von der Energiequelle an das Heizelement durchgeführt wird. Dabei kann durch ein Variieren der Schaltfrequenz (z. B. mittels einer Ansteuerung von Halbleiterschaltern) die Energieübertragung und somit die Temperatur des Heizelements beeinflusst werden, und somit auch die Heizregelung (oder auch Temperaturregelung) ermöglicht werden. Vorteilhafterweise kann somit eine Temperatur, insbesondere eine Medientemperatur (eines Mediums im Bereich des Heizelements z. B. im Rührgefäß), auf Basis von elektrischen Parameter des Heizelements, insbesondere einer Dickschichtheizung, ermittelt werden.

Bevorzugt wird gemäß Schritt a) der Widerstand des Heizelements als ein elektrischer Widerstand eines elektrischen Leiters des Heizelements erfasst, durch welchen ein elektrischer Strom zur Wärmeerzeugung (insbesondere aufgrund der Erhitzung des Leiters) geleitet wird. Gleichzeitig kann durch die Erfassung des Widerstands ein Widerstandswert ermittelt werden, welcher die bei dieser Wärmeerzeugung hervorgerufene Temperatur indiziert. Insbesondere wird durch die Erhitzung des Leiters die Heizungsfunktion bereitgestellt.

Die Nutzung des Widerstandswertes zur Bereitstellung der Temperaturabhängigkeit bei dem Heizbetrieb hat dabei den Vorteil, dass eine besonders zuverlässige und technisch einfache Möglichkeit zur Durchführung des Heizbetriebs möglich ist, bei welcher sehr exakt die Temperatur eingestellt werden kann. Auch kann hierbei auf zusätzliche Sensoren zur Temperaturmessung verzichtet werden, um die Kosten und die Komplexität weiter zu reduzieren.

Bevorzugt wird im Schritt b) ein Temperaturwert anhand des wenigstens einen ermittelten Widerstandswertes bestimmt, und dieser Temperaturwert als Eingabewert für den Heizbetrieb, insbesondere einer Heizregelung, genutzt. Alternativ kann auch der wenigstens eine ermittelte Widerstandswert direkt (ohne Umwandlung) als Eingabewert, z. B. als Regelgröße, genutzt werden. Auch der letztere Fall wird dabei als ein Bestimmen der Temperatur (z. B. gemäß Schritt b) ) verstanden, da dies nicht zwingend die Umwandlung in einen absoluten Temperaturwert voraussetzt. Vielmehr kann auch die Ermittlung des wenigstens einen Widerstandswertes bereits das Bestimmen der Temperatur umfassen, da der Widerstand des Heizelements für die Temperatur des Heizelements spezifisch ist.

Insbesondere ist das Heizelement Teil einer Heizung, vorzugsweise zur Erhitzung eines Mediums, bspw. in einem Rührgefäß einer Küchenmaschine. Dabei wurde überraschenderweise festgestellt, dass der ohmsche Widerstand des Heizelements, insbesondere einer Dickschichtheizung, sich proportional zur Temperatur der Heizung verhält. Dies ermöglicht es, den elektrischen Strom und/oder die elektrische Spannung bei aktivierter Heizung messtechnisch zu erfassen und den Widerstand zu berechnen. Somit kann der elektrische (d. h. ohmsche) Widerstand der Heizung als Grundlage für eine Temperaturregelung dienen.

Von Vorteil ist es, wenn in Abhängigkeit von dem wenigstens einen Widerstandswert eine Medientemperatur von einem Medium in einem Rührgefäß der Küchenmaschine bestimmt wird. Bspw. können hierzu empirisch ermittelte Zusammenhänge genutzt werden, die vorzugsweise in einer Datenbank und/oder durch einen Funktionsverlauf elektronisch in einem Datenspeicher hinterlegbar sind, um aus dem wenigstens einen Widerstandswert die Medientemperatur zu berechnen bzw. bestimmen zu können. So ist bei bekannter Struktur und Ausbildung des Rührgefäßes bspw. möglich, dass der Einfluss des Heizelements auf das Medium im Rührgefäß vorbestimmt werden kann. Von Vorteil kann dabei vorgesehen sein, dass die Art des Mediums ebenfalls bekannt ist, z. B. durch eine Eingabe eines Benutzers an der Küchenmaschine. Weiter kann es möglich sein, dass anhand des Widerstandswertes die Heizregelung erfolgt, insbesondere zur Erhitzung wenigstens eines Lebensmittels in einem Rührgefäß der Küchenmaschine, wobei das Heizelement am Rührgefäß befestigt ist, insbesondere in einem Boden des Rührgefäßes integriert ist.

Ein weiterer Vorteil kann dadurch erzielt werden, dass die Erfassung des elektrischen Widerstands (gemäß Schritt a) ) als flächige Temperaturüberwachung bei dem Heizelement verstanden wird. Bevorzugt weist das Heizelement eine flächige Ausbildung und/oder Erstreckung auf, sodass ggf. lokale Temperaturveränderungen, wie Hotspots, bei dem Heizelement entstehen können. Unter Hotspots werden insbesondere lokal begrenzte Temperaturerhöhungen verstanden, welche lokal den Widerstand des Heizelements ändern können. Diese werden bspw. dadurch hervorgerufen, dass unterschiedliche Wärmekapazitäten am Heizelement vorliegen, also bspw. ein Medium nur teilweise in Wärmeaustausch mit dem Heizelement steht (z. B. aufgrund einer Neigung des Rührgefäßes oder aufgrund einer inhomogenen Zusammensetzung des Mediums im Rührgefäß). Anhand einer Auswertung des wenigstens einen ermittelten Widerstandswertes kann eine Detektion dieser Hotspots ermöglicht werden, also eine flächige Überwachung erfolgen.

Es ist weiter denkbar, dass bei Schritt a) ein zeitlicher Verlauf von Widerstandswerten ermittelt wird, wobei eine lokale Temperaturveränderung, insbesondere Hotspots, bei dem Heizelement anhand einer Auswertung des Verlaufs bestimmt wird.

Auch kann es im Rahmen der Erfindung vorgesehen sein, dass das "Medium" sich auf den Inhalt des Rührgefäßes bezieht, also damit auch unterschiedliche Substanzen und/oder Lebensmittel umfassen kann.

Durch die Nutzung des elektrischen Widerstands des Heizelements als Grundlage für den Heizbetrieb, insbesondere einer Temperaturregelung, ergibt sich der weitere Vorteil, dass eine Erfassung der Temperatur auch bei hohen Schaltfrequenzen des Heizelements (z. B. über 2 kHz) möglich ist. Vorteilhafterweise kann dabei das Heizelement mit einer Schaltfrequenz im Bereich von 2 kHz bis 40 kHz, vorzugsweise 10 kHz bis 30 kHz, bevorzugt mit 20 kHz betrieben werden.

Bspw. kann es möglich sein, dass bei dem Heizbetrieb das Heizelement mit einer Schaltfrequenz angesteuert wird, welche insbesondere größer als 1 kHz oder größer als 2 kHz ist. Bevorzugt ist dabei das Heizelement als eine Dickschichtheizung ausgeführt.

Es ist erfindunqsqemäß vorgesehen, dass der Heizbetrieb als Temperaturregelung des Heizelements mit der Temperatur des Heizelements als Regelgröße durchgeführt wird. Somit kann die Temperaturreglung insbesondere als Heizregelung bei dem Heizelement zur Erhitzung eines Mediums effizient durchgeführt werden, und z. B. ein Anbrennen des Mediums vermieden werden.

Außerdem ist es denkbar, dass bei dem Heizbetrieb die Bestimmung der Temperatur für den Heizbetrieb lediglich anhand des erfassten Widerstands bzw. anhand des wenigstens einen Widerstandswertes durchgeführt wird, sodass auf einen separaten Temperatursensor (z. B. NTC-Sensor, also einem Heißleiter) verzichtet werden kann. Dies hat den Vorteil, dass Kosten und Bauraum eingespart wird, und z. B. die Anzahl der Steckkontakte in einem Rührgefäß reduziert werden kann.

Des Weiteren ist erfindungsgemäß vorgesehen, dass während des Heizbetriebs insbesondere des Heizelements zur Heizregelung wiederholt der Widerstand gemäß Schritt a) erfasst wird, wobei jeweils der Widerstandswert (gemäß Schritt a) ) dadurch ermittelt wird, dass wenigstens ein Strommesswert aus einer Strommessung bei dem Heizelement und wenigstens ein Spannungsmesswert aus einer Spannungsmessung bei dem Heizelement miteinander verglichen werden. Dies hat den Vorteil, dass während des Heizbetriebs, also bei aktiver Heizung, zuverlässig und zeiteffizient die Temperatur der Heizung bestimmt werden kann. Vorteilhafterweise kann dabei der Vergleich zur Ermittlung des Widerstandswertes dadurch erfolgen, dass die gemessenen Spannungs- und Stromwerte dividiert werden.

Ein weiterer Vorteil im Rahmen der Erfindung ist erzielbar, wenn anhand des wenigstens einen Widerstandswertes eine lokale Temperaturveränderung bei dem Heizelement detektiert und/oder erfasst wird, wobei bevorzugt hierzu bei Schritt b) eine (zeitliche) Änderungscharakteristik der ermittelten Widerstandswerte ausgewertet wird, wobei vorzugsweise hierzu bei Schritt a) ein zeitlicher Verlauf und/oder ein Gradient der Widerstandswerte ermittelt wird. Bspw. können bei Schritt a) mehrere Widerstandswerte für unterschiedliche Zeitpunkte ermittelt werden, z. B. zyklisch und/oder in regelmäßigen zeitlichen Abständen. Bevorzugt werden hierbei auch die Erfassungszeitpunkte (Messzeitpunkte) ermittelt und/oder zwischengespeichert, an denen die Widerstandswerte ermittelt worden sind. In anderen Worten kann anhand der ermittelten Widerstandswerte und den zugehörigen Messzeitpunkten ein Widerstandsgradient berechnet werden. Eine starke Änderung des Gradienten (z. B. ein plötzlicher Anstieg) kann dabei auf einen Hotspot hinweisen, welcher lokal den Widerstand des Heizelements ändert. Somit kann die Änderungscharakteristik (d. h. eine Veränderung des Gradienten) eine lokale Widerstandsänderung, insbesondere einen Hotspot, indizieren. Dies kann genutzt werden, um z. B. die Temperatur der Heizung herunter zu regeln und damit ein Verbrennen des Mediums (z. B. eines Gargutes) zu vermeiden.

Vorteilhaft ist es zudem, wenn durch eine wiederholte Erfassung des Widerstands während des Heizbetriebs ein Widerstandsgradient bestimmt wird, wobei hierzu für jeweilige Widerstandswerte ein Erfassungszeitpunkt bestimmt und insbesondere mit dem jeweiligen Widerstandswert gespeichert wird. Insbesondere können die Erfassungszeitpunkte den zugehörigen Widerstandswerten zugeordnet werden, z. B. durch eine Tabelle und/oder in einer Datenbank und/oder durch Nutzung eines elektronisches (z. B. digitalen) Zeigers, welcher die Zuordnung vornimmt. Bspw. werden die gespeicherten Erfassungszeitpunkte und/oder die gespeicherten Widerstandswerte durch eine Auswertevorrichtung ausgelesen und verarbeitet, um einen Widerstandsgradienten zu berechnen.

Es kann optional möglich sein, dass bei Schritt a) der Gesamtwiderstand des Heizelements erfasst wird, also der elektrische Widerstand über die gesamte Fläche des Heizelements bestimmt wird. In anderen Worten kann ein Widerstandswert gemäß Schritt a) ermittelt werden, welcher für den gesamten Widerstand des Heizelements spezifisch ist. Von Vorteil ist es dabei, wenn der Heizbetrieb als Temperaturregelung durchgeführt wird, und hierfür eine Bestimmung der Temperatur bei dem Heizelement ausschließlich anhand der Widerstandserfassung (gemäß Schritt a) ) bei dem Heizelement erfolgt, d. h. insbesondere ohne einen separaten Temperatursensor, wie einen NTC Widerstand, zu nutzen. Auf diese Weise können Kosten und der technische Aufwand deutlich reduziert werden, wenn der Heizbetrieb als Temperaturregelung mit der Temperatur als Regelgröße durchgeführt wird.

Vorteilhafterweise kann bei der Erfindung vorgesehen sein, dass bei oder nach Schritt b) eine Analyse des wenigstens einen ermittelten Widerstandswertes, und insbesondere weiterer Informationen über das Heizelement und/oder über ein Medium in einem Rührgefäß der Küchenmaschine, durchgeführt wird, wobei durch die Analyse wenigstens eines der nachfolgenden Analyseergebnisse bestimmt wird:
- wenigstens eine Information über eine lokale Temperaturveränderung bei dem Heizelement,
- (wenigstens eine Information über) eine Temperatur des Mediums,
- wenigstens eine Information über wenigstens eine Wärmekapazität des Mediums,
- wenigstens eine Information über eine Zusammensetzung des Mediums, insbesondere eine Art und/oder einer Menge wenigstens eines Lebensmittels im Rührgefäß.

Bspw. kann die Analyse durch eine Auswertevorrichtung durchgeführt werden. Hierzu kann die Auswertevorrichtung z. B. mit einem elektronischen Datenspeicher verbunden sein, um aus dem Datenspeicher Informationen für die Analyse auszulesen. Zur Analyse kann dabei ggf. ein Vergleich dieser Informationen mit dem wenigstens einen Widerstandswert durchgeführt werden. Bspw. ist dabei die Information empirisch und/oder statistisch ermittelt. Hierbei wird also genutzt, dass bestimmte Widerstandscharakteristika bzw. Widerstandsgradientcharakteristika weiterführende Informationen indizieren können, welche ggf. zuvor empirisch ermittelt werden müssen. So kann bspw. anhand der Analyse der Widerstandswerte festgestellt werden, wenn ein Anstieg des Widerstands um bspw. 3 Ohm in einem bestimmten Zeitraum, z. B. maximal innerhalb von 1 s oder maximal innerhalb von 2 s oder maximal innerhalb von 5 s oder maximal innerhalb von 10 s oder maximal innerhalb von 20 s, erfolgt, um dann eine lokale Temperaturveränderung, insbesondere einen Hotspot, zu detektieren. Auch kann bei der Analyse der wenigstens eine ermittelte Widerstandswert in Korrelation mit einer Medientemperatur gesetzt werden. Die Auswertevorrichtung ist bspw. als Elektronik und/oder als Mikrocontroller und/oder als Prozessor und/oder als wenigstens ein integrierter Schaltkreis ausgebildet.

Vorzugsweise weist die Erfassungsvorrichtung der weiter unten definierten erfindungsgemäßen Küchenmaschine auf:
- eine Spannungsmessvorrichtung zur Messung einer elektrischen Spannung bei dem Heizelement,
- eine Strommessvorrichtung zur Messung eines elektrischen Stroms bei dem Heizelement,
- eine Auswertevorrichtung zur Erfassung, insbesondere Bestimmung und/oder Berechnung, eines elektrischen Widerstands bei dem Heizelement durch eine Auswertung von wenigstens einem (Spannungs-) Erfassungswert der Spannungsmessvorrichtung und wenigstens einem (Strom-) Erfassungswert der Strommessvorrichtung, sodass vorzugsweise wenigstens ein Widerstandswert ermittelbar ist, um den wenigstens einen Widerstandswert für einen temperaturabhängigen Heizbetrieb, insbesondere Heizregelung, des Heizelements bereitzustellen.

Außerdem kann es im Rahmen der Erfindung von Vorteil sein, dass die Spannungsmessvorrichtung einen aktiven Gleichrichter umfasst, sodass ein Spannungsabfall bei Dioden der Spannungsmessvorrichtung zumindest teilweise oder überwiegend ausgleichbar ist. Vorzugsweise kann dabei der aktive Gleichrichter den Spannungsabfall über den Dioden ausgleichen, sodass auch Spannungen unter der Sperrspannung der Dioden (z. B. unterhalb 0,7 V) gleichgerichtet und gemessen werden können. Damit kann sehr effizient die Spannungsmessung durch den aktiven Gleichrichter realisiert werden.

Vorzugsweise weist das Heizsystem der weiter unten definierten erfindungsgemäßen Küchenmaschine auf:
- eine Erfassungsvorrichtung, wobei vorteilhafterweise durch die Erfassungsvorrichtung ein elektrischer Widerstand bei dem Heizelement erfassbar ist,
- eine Kontrollvorrichtung, insbesondere eine Regelungsvorrichtung, wie ein Regler, zur Kontrolle, vorzugsweise Regelung des Betriebs, des Heizelements, wobei die Kontrollvorrichtung elektrisch mit der Erfassungsvorrichtung verbunden ist, um die Kontrolle anhand der Erfassung des Widerstands durchzuführen.

Damit bringt das Heizsystem die gleichen Vorteile mit sich, wie sie ausführlich mit Bezug auf ein erfindungsgemäßes Verfahren und/oder eine Erfassungsvorrichtung beschrieben worden sind. Zudem kann das Heizsystem geeignet sein, gemäß einem erfindungsgemäßen Verfahren betrieben zu werden.

Außerdem unter Schutz gestellt ist eine Küchenmaschine nach Anspruch 6.

Es kann optional möglich sein, dass das Heizelement in ein Rührgefäß der Küchenmaschine integriert ist, sodass eine Temperatur, welche gemäß dem erfindungsgemäßen Heizsystem anhand des erfassten Widerstands ermittelbar ist, für eine Temperatur eines Mediums im Rührgefäß spezifisch ist. Bspw. kann anhand von empirischen Informationen, welche z. B. in einem Datenspeicher vorgespeichert sind, die Korrelation zwischen der Temperatur des Heizelements und des Mediums genutzt werden, um die Temperatur des Mediums zuverlässig zu bestimmen.

Optional kann es vorgesehen sein, dass das Heizelement in einen Rührgefäß-Boden eines Rührgefäßes der Küchenmaschine integriert ist, und sich darin flächig zur Erhitzung eines Mediums im Rührgefäß erstreckt (sodass vorzugsweise der erfasste Widerstand für eine Temperatur des Mediums im Rührgefäß spezifisch ist). Insbesondere kann sich das Heizelement über mindestens 50 % oder mindestens 70 % oder mindestens 80 % oder mindestens 90 % der gesamten Fläche des Rührgefäß-Bodens erstrecken. Damit kann das Medium im Rührgefäß zuverlässig erhitzt werden. Dabei ist es alternativ oder zusätzlich möglich, dass das Heizelement als eine Dickschichtheizung ausgeführt ist, um eine effiziente Heizung des Mediums durchzuführen.

Gemäß einer vorteilhaften Weiterbildung der Erfindung kann vorgesehen sein, dass zur Erfassung des Widerstands eine Erfassung eines elektrischen Stroms, welcher durch das Heizelement fließt, durchgeführt wird, wobei vorzugsweise zur Erfassung des elektrischen Stroms durch das Heizelement ein Shuntwiderstand seriell zum Heizelement geschaltet ist. Auch kann es möglich sein, dass zur Erfassung des Stroms eine elektrische Spannung über dem Shuntwiderstand durch einen Operationsverstärker gemessen und/oder verstärkt wird, und ggf. der Operationsverstärker mit einer Offset-Spannung zur Anhebung eines Messpotentials beschaltet ist. Somit kann die Spannung und/oder eine Spannungsdifferenz über dem Shunt durch den Operationsverstärker verstärkt werden, so dass bspw. ein Analog-Digital-Konverter (ADC) der Auswertevorrichtung (z. B. als ein Mikrocontroller) diese ausreichend genau messen kann. Damit keine negativen Spannungswerte am ADC anliegen, kann der Operationsverstärker mit der Offset-Spannung beschaltet werden, um das Messpotential zur Strommessung beim Heizelement entsprechend anzuheben. Es ist weiter von Vorteil, wenn die Erfassung des Stroms, insbesondere Strommessung, nur bei aktiver Heizung durchgeführt wird.

Ebenfalls Gegenstand der Erfindung ist ein Computerprogrammprodukt nach Anspruch 10.

Damit bringt das erfindungsgemäße Computerprogrammprodukt die gleichen Vorteile mit sich, wie sie ausführlich mit Bezug auf erfindungsgemäßes Verfahren beschrieben worden sind. Zudem kann das Computerprogrammprodukt dazu ausgeführt sein, die Schritte eines erfindungsgemäßen Verfahrens zu initiieren bzw. abzubilden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Fig. 1: eine schematische Darstellung einer Strommessvorrichtung,
- Fig. 2: eine schematische Darstellung einer Nutzung einer Offset-Spannung zur Strommessung,
- Fig. 3: eine schematische Darstellung einer Spannungsmessvorrichtung mit aktivem Gleichrichter,
- Fig. 4: eine schematische Darstellung einer erfindungsgemäßen Küchenmaschine und
- Fig. 5: eine schematische Darstellung einer Änderungscharakteristik.

In den nachfolgenden Figuren werden für die gleichen technischen Merkmale auch von unterschiedlichen Ausführungsbeispielen die identischen Bezugszeichen verwendet.

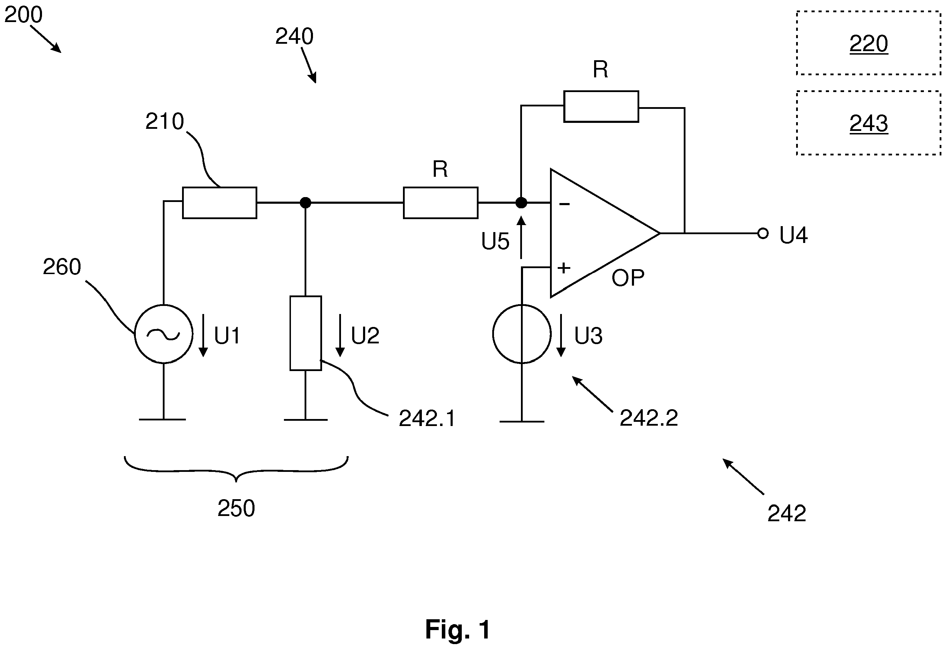

In den Figuren 1, 3 und 4 werden schematisch Teile eines Heizsystems 200 für eine erfindungsgemäße Küchenmaschine 1 dargestellt. Ferner dienen die Figuren 1 bis 5 zur Darstellung einer Erfassungsvorrichtung 240 und zur Visualisierung eines erfindungsgemäßen Verfahrens.

In Figur 1 ist gezeigt, dass eine Erfassungsvorrichtung 240 eine Strommessvorrichtung 242 aufweisen kann. Die Strommessvorrichtung 242 dient zur Erfassung eines elektrischen Stroms, welcher durch ein Heizelement 210, insbesondere einer Dickschichtheizung 210, in einem Lastkreis 250 eines Heizsystems 200 fließt. Dieser Strom ist gemäß dem ohmschen Gesetz mit einem elektrischen Widerstand des Heizelements 210 verknüpft und insbesondere auch abhängig, und ggf. zumindest für einen teilweisen Temperaturbereich proportional, zu einer Temperatur des Heizelements 210. Somit kann die Strommessung (ggf. zusammen mit einer Spannungsmessung) zur Heizregelung genutzt werden, bspw. einer Regelung einer Energieversorgung des Heizelements 210 durch eine Spannungsquelle 260. Entsprechend kann eine in Figur 1 mit U1 gekennzeichnete Versorgungsspannung (insbesondere als eine Wechselspannung) genutzt und/oder gemäß der Heizregelung durch eine Kontrollvorrichtung 220 verändert werden, um eine Erhitzung eines Mediums 20 z. B. in einem Rührgefäß 2 einer Küchenmaschine 1 durchzuführen. Des Weiteren ist eine Eingangsspannung U2 über den Shuntwiderstand 242.1 gezeigt, welche durch einen Operationsverstärker OP (mit einer Differenzspannung U5) verstärkt werden kann. Dieser ist ggf. noch mit einer Offset-Spannung U3 einer entsprechenden Spannungsquelle 242.2 beschaltet, um eine Ausgangsspannung U4 zu erhalten. Für die Schaltung sind ggf. noch weitere Widerstände R vorgesehen, welche auch unterschiedliche Widerstandswerte aufweisen können.

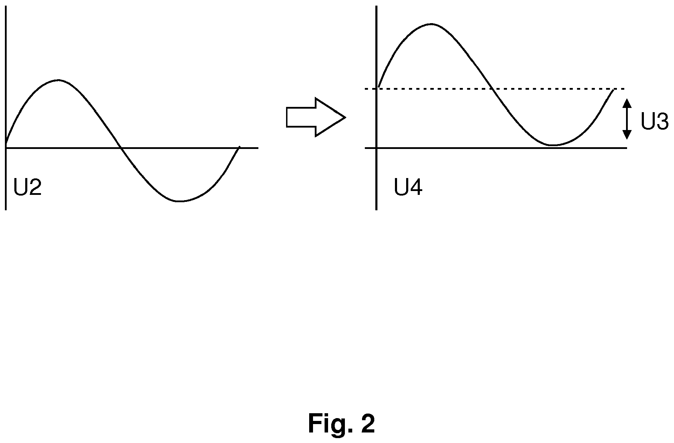

Zur Strommessung wird der Shuntwiderstand 242.1 genutzt, welcher seriell zu dem Heizelement 210 in den Lastkreis 250 integriert sein kann. Eine Spannungsdifferenz U5, welche von der Eingangsspannung U2 über dem Shuntwiderstand 242.1 abhängig ist, wird mittels wenigstens eines Operationsverstärkers OP verstärkt, sodass eine Auswertevorrichtung 243, insbesondere ein Analog-Digital-Konverter (ADC) dieser Auswertevorrichtung 243, z. B. eines Mikroprozessors, diese ausreichend genau messen kann. Damit keine negativen Spannungswerte an der Auswertevorrichtung 243 bzw. am ADC vorliegen, kann der Operationsverstärker OP mit der Offset-Spannung U3 beschaltet sein, welche das Messpotential anhebt. Dies ist in Figur 2 auch näher dargestellt (die Anhebung wird dort durch einen Pfeil repräsentiert). Auf diese Weise kann sehr zuverlässig anhand des Spannungswertes der Ausgangsspannung U4 ein Stromwert eines Stroms bei dem Heizelements 210 ermittelt werden.

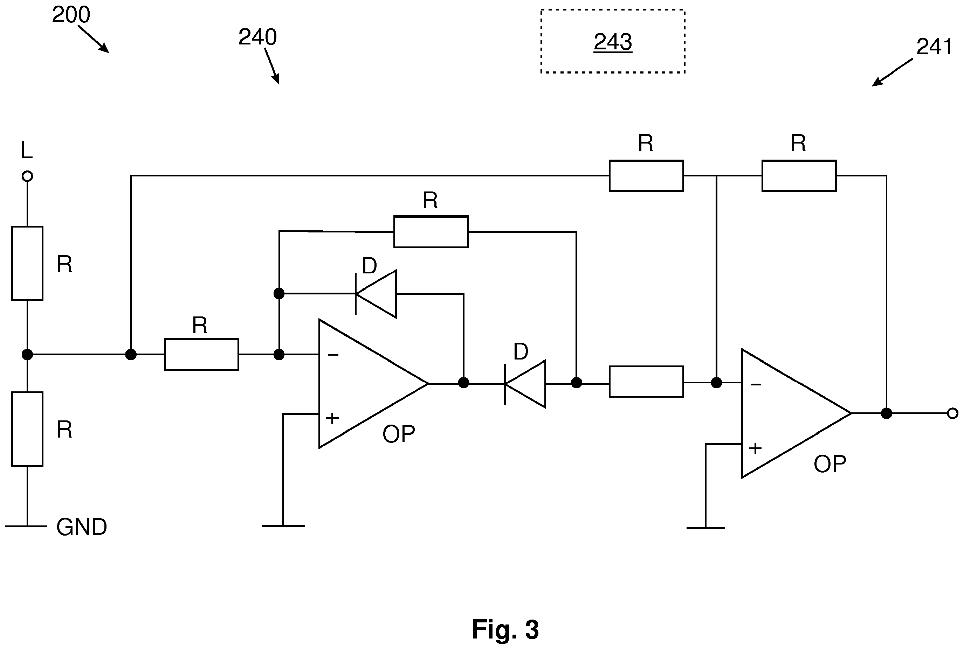

Figur 3 zeigt, dass die Erfassungsvorrichtung 240 auch eine Spannungsmessvorrichtung 241 aufweisen kann, um eine elektrische Spannung bei dem Heizelement 210 zu ermitteln. Diese kann einen Spannungsteiler umfassen (hier mit einem Eingang L, zwei Widerständen R und einem Massepotential GND dargestellt), um eine nicht explizit hervorgehobene Eingangsspannung als Messspannung bereitzustellen. Die in Figur 3 gezeigte Schaltung umfasst ferner einen aktiven Gleichrichter, um einen Spannungsabfall über die in Figur 3 gezeigten Dioden D auszugleichen, sodass auch Spannungen unter der Sperrspannung der Dioden D (z. B. unterhalb 0,7 V) gleichgerichtet und gemessen werden können. Dies ermöglicht es, sehr zuverlässig und mit hoher Genauigkeit einen Spannungswert für die Regelung des Heizelements bereitzustellen. Der durch die in Figur 3 gezeigte Schaltung ermittelte Spannungswert kann zusammen mit dem durch die Strommessvorrichtung 242 gemessenen Stromwert genutzt werden, um einen Widerstandswert eines Widerstands des Heizelements 219 zu ermittelt.

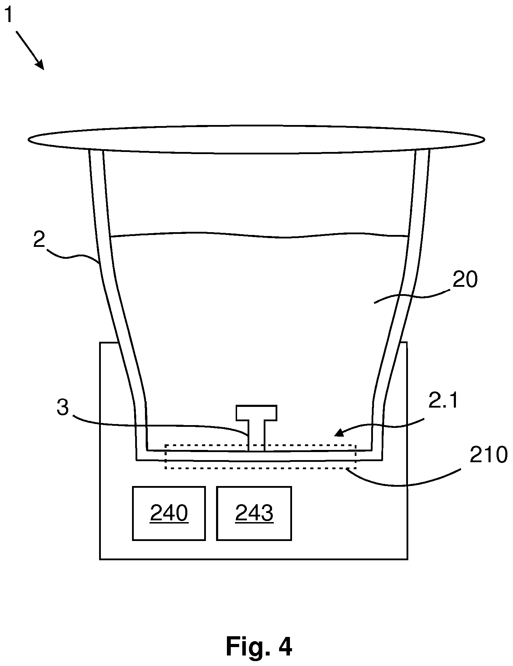

In Figur 4 ist schematisch eine Küchenmaschine 1 dargestellt, welche ein Rührgefäß 2 umfasst, in das ein Medium 20 (mit wenigstens einem Lebensmittel) eingefüllt werden kann. Das Rührgefäß 2 kann lösbar mit einer Aufnahme der Küchenmaschine 1 verbunden werden, und ein Rührwerk 3 aufweisen. In einem Rührgefäß-Boden 2.1 kann ferner ein Heizelement 210 eines Heizsystems 200 integriert sein, um das Medium 20 zu erhitzen. Zur Heizreglung kann ferner eine Auswertevorrichtung 243 und eine Erfassungsvorrichtung 240 vorgesehen sein.

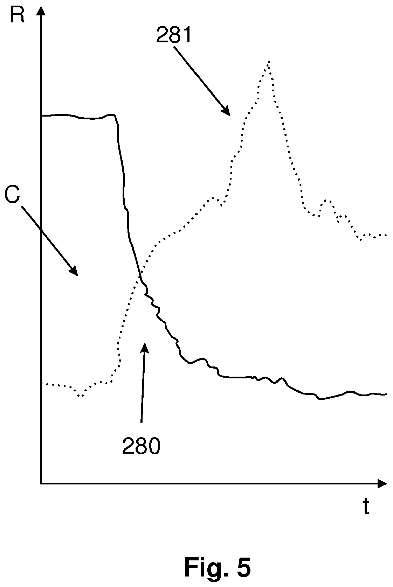

In Figur 5 ist schematisch eine Änderungscharakteristik C (mit Widerstandswerten eines Widerstands R des Heizelements 210 über die Zeit t) gezeigt. Die gestrichelte Linie zeigt die ermittelten Widerstandswerte eines erfassten Widerstands des Heizelements 210, anhand dessen eine Temperatur des Heizelements 210 bzw. des Mediums 20 bestimmt werden kann. Dem gegenübergestellt ist gemäß einer weiteren Kurve ein Verlauf eines gemessenen Temperaturwertes durch einen separaten Sensor. Deutlich ist dabei in beiden Kurven eine Aufheizphase 280 zu erkennen, wohingegen sich der weitere Verlauf nach der Aufheizphase 280 unterscheidet. Nur in der gestrichelten Kurve (also auch gemäß der erfindungsgemäß über den Widerstand des Heizelements 210 bestimmten Temperatur) ist die Entstehung eines sogenannten Hots-Spots erkennbar. Im vorliegenden Fall wurde dabei das Rührgefäß 2 geneigt, sodass das Medium nur teilweise in wärmeübertragenen Kontakt mit dem Heizelement 210 war. Ein ähnlicher Effekt kann z. B. durch ein inhomogenes Medium aufgrund der zubereiteten Lebensmittel hervorgerufen werden.

Die voranstehende Erläuterung der Ausführungsformen beschreibt die vorliegende Erfindung ausschließlich im Rahmen von Beispielen.

### Bezugszeichenliste

- 1: Küchenmaschine
- 2: Rührgefäß
- 2.1: Rührgefäß-Boden
- 3: Rührwerk

- 20: Medium

- 200: Heizsystem
- 210: Heizelement, Dickschichtheizung

- 220: Kontrollvorrichtung

- 240: Erfassungsvorrichtung
- 241: Spannungsmessvorrichtung
- 242: Strommessvorrichtung
- 242.1: Shuntwiderstand
- 242.2: Offset-Spannung
- 243: Auswertevorrichtung
- 250: Lastkreis

- 260: Spannungsquelle, Wechselspannungsquelle

- 280: Aufheizphase
- 281: Neigung des Topfes, Hot-Spot

- t: Zeit
- C: Änderungscharakteristik
- D: Diode
- GND: Massepotential
- OP: Operationsverstärker
- R: Widerstand
- U1: Versorgungsspannung
- U2: Eingangsspannung
- U3: Offset-Spannung
- U4: Ausgangsspannung
- U5: Differenzspannung

## Patentansprüche

1. Verfahren zum Betreiben eines Heizelements (210) bei einer Küchenmaschine (1) zur zumindest teilweise automatischen Zubereitung von Lebensmitteln,
**wobei die nachfolgenden Schritte durchgeführt werden:**
a) Erfassen eines elektrischen Widerstands des Heizelements (210), sodass wenigstens ein Widerstandswert ermittelt wird,
b) Durchführen eines Heizbetriebs bei dem Heizelement (210) anhand des wenigstens einen ermittelten Widerstandswertes, um den Heizbetrieb in Abhängigkeit von einer Temperatur des Heizelements (210) durchzuführen,
wobei
der Heizbetrieb als Temperaturregelung des Heizelements (210) mit der Temperatur als Regelgröße durchgeführt wird,
und während des Heizbetriebs wiederholt der Widerstand gemäß Schritt a) erfasst wird, wobei jeweils der Widerstandswert dadurch ermittelt wird, dass wenigstens ein Strommesswert aus einer Strommessung bei dem Heizelement (210) und wenigstens ein Spannungsmesswert aus einer Spannungsmessung bei dem Heizelement (210) miteinander verglichen werden.

2. Verfahren nach Anspruch 1,
**dadurch gekennzeichnet,**
**dass** anhand des wenigstens einen Widerstandswertes eine lokale Temperaturveränderung bei dem Heizelement (210) erfasst wird,
bevorzugt dadurch, dass bei Schritt b) eine Änderungscharakteristik (C) der ermittelten Widerstandswerte ausgewertet wird,
wobei vorzugsweise hierzu bei Schritt a) ein zeitlicher Verlauf und/oder ein Gradient der Widerstandswerte ermittelt wird.

3. Verfahren nach einem der vorhergehenden Ansprüche,
**dadurch gekennzeichnet,**
**dass** durch eine wiederholte Erfassung des Widerstands während des Heizbetriebs ein Widerstandsgradient bestimmt wird, wobei hierzu für jeweilige Widerstandswerte ein Erfassungszeitpunkt bestimmt und insbesondere mit dem jeweiligen Widerstandswert gespeichert wird.

4. Verfahren nach einem der vorhergehenden Ansprüche,
**dadurch gekennzeichnet,**
**dass** bei Schritt a) der Gesamtwiderstand des Heizelements (210) erfasst wird, wobei vorzugsweise der Heizbetreib als eine Temperaturregelung gemäß Schritt b) dadurch durchgeführt wird, dass eine Bestimmung der Temperatur bei dem Heizelement (210) zur Temperaturregelung ausschließlich anhand der Erfassung des Gesamtwiderstands des Heizelements (210) gemäß Schritt a) erfolgt.

5. Verfahren nach einem der vorhergehenden Ansprüche,
**dadurch gekennzeichnet,**
**dass** bei oder nach Schritt b) eine Analyse des wenigstens einen ermittelten Widerstandswertes, und insbesondere weiterer Informationen über das Heizelement (210) und/oder über ein Medium (20) in einem Rührgefäß (2) der Küchenmaschine (1), durchgeführt wird, wobei durch die Analyse wenigstens eines der nachfolgenden Analyseergebnisse bestimmt wird:
- eine Information über eine lokale Temperaturveränderung bei dem Heizelement (210),
- eine Temperatur des Mediums (20),
- eine Information über wenigstens eine Wärmekapazität des Mediums (20),
- eine Information über eine Zusammensetzung des Mediums (20), insbesondere einer Art und/oder einer Menge wenigstens eines Lebensmittels im Rührgefäß (2).

6. Küchenmaschine (1) zur zumindest teilweise automatischen Zubereitung von Lebensmitteln, mit:
- einem Rührgefäß (2) zur Aufnahme und Zubereitung der Lebensmittel,
- einem Heizsystem (200) zum Betreiben eines Heizelements (210) der Küchenmaschine (1) zur zumindest teilweise automatischen Zubereitung von Lebensmitteln, aufweisend:
- eine Erfassungsvorrichtung (240) zur Erfassung eines elektrischen Widerstands bei dem Heizelement (210), wobei das Heizelement (210) in das Rührgefäß (2) integriert ist,
- eine Kontrollvorrichtung (220) zur Kontrolle des Heizelements (210),
wobei die Kontrollvorrichtung (220) elektrisch mit der Erfassungsvorrichtung (240) verbunden ist, um die Kontrolle anhand der Erfassung des Widerstands durchzuführen,
wobei das Heizsystem (200) zur Durchführung eines Verfahrens nach einem der vorhergehenden Ansprüche ausgestaltet ist.

7. Küchenmaschine (1) nach Anspruch 6,
**dadurch gekennzeichnet,**
**dass** das Heizelement (210) in einen Boden (2.1) des Rührgefäßes (2) der Küchenmaschine (1) integriert ist, und sich darin flächig zur Erhitzung eines Mediums (20) im Rührgefäß (2) erstreckt, sodass ein elektrischer Widerstand des Heizelements (210) für eine Temperatur des Mediums (20) im Rührgefäß (2) spezifisch ist und/oder dass das Heizelement (210) als eine Dickschichtheizung (210) ausgeführt ist.

8. Küchenmaschine (1) nach einem der vorhergehenden Ansprüche 6 oder 7,
**dadurch gekennzeichnet,**
**dass** die Erfassungsvorrichtung (240) aufweist:
- eine Spannungsmessvorrichtung (241) zur Messung einer elektrischen Spannung bei dem Heizelement (210),
- eine Strommessvorrichtung (242) zur Messung eines elektrischen Stroms bei dem Heizelement (210),
- eine Auswertevorrichtung (243) zur Erfassung eines elektrischen Widerstands bei dem Heizelement (210) durch eine Auswertung von Erfassungswerten der Spannungsmessvorrichtung (241) und der Strommessvorrichtung (242), sodass wenigstens ein Widerstandswert ermittelbar ist, um den wenigstens einen Widerstandswert für einen temperaturabhängigen Heizbetrieb des Heizelements (210) bereitzustellen,
wobei der Heizbetrieb als Temperaturregelung des Heizelements (210) mit einer Temperatur als Regelgröße erfolgt.

9. Küchenmaschine (1) nach Anspruch 8,
**dadurch gekennzeichnet,**
**dass** die Spannungsmessvorrichtung (241) einen aktiven Gleichrichter umfasst, sodass ein Spannungsabfall bei Dioden (D) der Spannungsmessvorrichtung (241) zumindest teilweise oder überwiegend ausgleichbar ist.

10. Computerprogrammprodukt zum Betreiben eines Heizelements (210), wobei das Computerprogrammprodukt dazu ausgebildet ist, bei einer Ausführung durch eine elektronische Auswertevorrichtung (243) die Durchführung der nachfolgenden Schritte zu initiieren:
a) Erfassen mittels einer Erfassungsvorrichtung (240) eines elektrischen Widerstands des Heizelements (210), sodass wenigstens ein Widerstandswert ermittelt wird,
b) Durchführen mittels einer Kontrollvorrichtung (220) eines Heizbetriebs bei dem Heizelement (210) anhand des wenigstens einen ermittelten Widerstandswertes, um den Heizbetrieb in Abhängigkeit von einer Temperatur des Heizelements (210) durchzuführen,
wobei durch die Ausführung des Computerprogrammprodukts ein Verfahren nach einem der vorhergehenden Ansprüche durchgeführt wird,
wobei der Heizbetrieb als Temperaturregelung des Heizelements (210) mit der Temperatur als Regelgröße durchgeführt wird, und während des Heizbetriebs wiederholt der Widerstand gemäß Schritt a) erfasst wird, wobei jeweils der Widerstandswert dadurch ermittelt wird, dass wenigstens ein Strommesswert aus einer Strommessung bei dem Heizelement (210) und wenigstens ein Spannungsmesswert aus einer Spannungsmessung bei dem Heizelement (210) miteinander verglichen werden.

## Claims

1. A method of operating a heating element (210) in a food processor (1) for at least partially automatic preparation of food,
**comprising the steps of:**
a) detecting an electrical resistance of the heating element (210) so that at least one resistance value is determined,
b) performing a heating operation on the heating element (210) based on the at least one determined resistance value to perform the heating operation depending on a temperature of the heating element (210),
wherein the heating operation is performed as a temperature control of the heating element (210) with the temperature as a controlled variable,
and during the heating operation, the resistance is repeatedly detected in accordance with step a), the resistance value being determined in each case by comparing at least one current measurement value from a current measurement at the heating element (210) and at least one voltage measurement value from a voltage measurement at the heating element (210) with one another.

2. The method of claim 1,
**characterized in that**
a local temperature change in the heating element (210) is detected on the basis of the at least one resistance value,
preferably **in that** in step b) a change characteristic (C) of the determined resistance values is evaluated,
wherein preferably for this purpose in step a) a time curve and/or a gradient of the resistance values is determined.

3. The method according to any one of the preceding claims,
**characterized in that**
a resistance gradient is determined by repeated detection of the resistance during the heating operation, a detection time being determined for this purpose for respective resistance values and being stored in particular with the respective resistance value.

4. The method according to any one of the preceding claims,
**characterized in that**
in step a) the total resistance of the heating element (210) is detected,
wherein preferably the heating operation is performed as a temperature control according to step b) by performing a determination of the temperature at the heating element (210) for temperature control solely based on the detection of the total resistance of the heating element (210) according to step a).

5. The method according to any one of the preceding claims,
**characterized in that**
an analysis of the at least one determined resistance value, and in particular of further information about the heating element (210) and/or about a medium (20) in a stirring vessel (2) of the food processor (1), is carried out at or after step b), at least one of the following analysis results being determined by the analysis:
- information about a local temperature change at the heating element (210),
- a temperature of the medium (20),
- information on at least one heat capacity of the medium (20),
- information about a composition of the medium (20), in particular a type and/or a quantity of at least one foodstuff in the stirring vessel (2).

6. Food processor (1) for at least partially automatic preparation of food, comprising:
- a stirring vessel (2) for receiving and preparing the food,
- a heating system (200) for operating a heating element (210) of the food processor (1) for at least partially automatic preparation of food, comprising:
- a detection device (240) for detecting an electrical resistance at the heating element (210), wherein the heating element (210) is integrated into the stirring vessel (2),
- a control device (220) for controlling the heating element (210),
wherein the control device (220) is electrically connected to the detection device (240) to perform the control based on the detection of the resistance,
wherein the heating system (200) is configured to perform a method according to any one of the preceding claims.

7. Food processor (1) according to claim 6,
**characterized in that**
the heating element (210) is integrated in a bottom (2.1) of the stirring vessel (2) of the food processor (1) and extends flat therein for heating a medium (20) in the stirring vessel (2), so that an electrical resistance of the heating element (210) is specific for a temperature of the medium (20) in the stirring vessel (2)
and/or **in that** the heating element (210) is configured as a thick film heater (210).

8. Food processor (1) according to any one of the preceding claims 6 or 7,
**characterized in that**
the detection device (240) comprises:
- a voltage measuring device (241) for measuring an electrical voltage at the heating element (210),
- a current measuring device (242) for measuring an electric current at the heating element (210),
- an evaluation device (243) for detecting an electrical resistance at the heating element (210) by evaluating detection values of the voltage measuring device (241) and the current measuring device (242), so that at least one resistance value can be determined in order to provide the at least one resistance value for a temperature-dependent heating operation of the heating element (210),
wherein the heating operation is performed as a temperature control of the heating element (210) with a temperature as a controlled variable.

9. Food processor (1) according to claim 8,
**characterized in that**
the voltage measuring device (241) comprises an active rectifier, so that a voltage drop at diodes (D) of the voltage measuring device (241) can be at least partially or predominantly compensated.

10. A computer program product for operating a heating element (210), the computer program product being adapted to initiate performance of the following steps when executed by an electronic evaluation device (243):
a) detecting, by means of a detection device (240), an electrical resistance of the heating element (210) so that at least one resistance value is determined,
b) performing, by means of a control device (220), a heating operation on the heating element (210) based on the at least one determined resistance value to perform the heating operation depending on a temperature of the heating element (210),
wherein by executing the computer program product, a method according to any one of the preceding claims is performed,
wherein the heating operation is carried out as temperature control of the heating element (210) with the temperature as controlled variable, and during the heating operation the resistance is repeatedly detected according to step a), wherein in each case the resistance value is determined by comparing at least one current measurement value from a current measurement at the heating element (210) and at least one voltage measurement value from a voltage measurement at the heating element (210) with one another.

## Revendications

1. Procédé de fonctionnement d'un élément chauffant (210) dans un robot de cuisine (1) pour la préparation au moins partiellement automatique d'aliments,
**comprenant les étapes suivantes:**
a) détecter une résistance électrique de l'élément chauffant (210) de sorte qu'au moins une valeur de résistance soit déterminée,
b) effectuer une opération de chauffage au niveau de l'élément chauffant (210) sur la base de la au moins une valeur de résistance déterminée pour effectuer l'opération de chauffage en fonction d'une température de l'élément chauffant (210),
dans lequel l'opération de chauffage est effectuée comme une commande de température de l'élément chauffant (210) avec la température comme variable commandée,
et pendant l'opération de chauffage, la résistance est détectée de manière répétée selon l'étape a), dans laquelle dans chaque cas la valeur de résistance est déterminée en comparant au moins une valeur mesurée de courant à partir d'une mesure de courant au niveau de l'élément chauffant (210) et au moins une valeur mesurée de tension à partir d'une mesure de tension au niveau de l'élément chauffant (210) l'une avec l'autre.

2. Procédé selon la revendication 1,
**caractérisé en ce**
**qu'**un changement de température local dans l'élément chauffant (210) est détecté sur la base de l'au moins une valeur de résistance,
de préférence en ce que, à l'étape b), une caractéristique de changement (C) des valeurs de résistance déterminées est évaluée,
de préférence, on détermine à cet effet, à l'étape a), une évolution dans le temps et/ou un gradient des valeurs de résistance.

3. Procédé selon l'une quelconque des revendications précédentes,
**caractérisé en ce**
**qu'**un gradient de résistance est déterminé par une détection répétée de la résistance pendant l'opération de chauffage, un temps de détection étant déterminé à cet effet pour des valeurs de résistance respectives et étant mémorisé en particulier avec la valeur de résistance respective.

4. Procédé selon l'une quelconque des revendications précédentes,
**caractérisé en ce que**
à l'étape a), la résistance totale de l'élément chauffant (210) est détectée,
dans lequel, de préférence, l'opération de chauffage est effectuée en tant que commande de température selon l'étape b) **en ce qu'**une détermination de la température au niveau de l'élément chauffant (210) pour le commande de température est effectuée exclusivement sur la base de la détection de la résistance totale de l'élément chauffant (210) selon l'étape a).

5. Procédé selon l'une quelconque des revendications précédentes,
**caractérisé en ce**
**qu'**une analyse de l'au moins une valeur de résistance déterminée, et en particulier d'autres informations sur l'élément chauffant (210) et/ou sur un milieu (20) dans un récipient de mélange (2) du robot de cuisine (1), est effectuée à l'étape b) ou après celle-ci, au moins un des résultats d'analyse ultérieurs étant déterminé par l'analyse :
- des informations sur un changement de température local au niveau de l'élément chauffant (210),
- une température du milieu (20),
- des informations sur au moins une capacité thermique du milieu (20),
- des informations sur une composition du milieu (20), en particulier un type et/ou une quantité d'au moins une denrée alimentaire dans le récipient de mélange (2).

6. Robot de cuisine (1) pour la préparation au moins partiellement automatique d'aliments, avec :
- un récipient de mélange (2) pour recevoir et préparer les aliments,
- un système de chauffage (200) pour faire fonctionner un élément chauffant (210) du robot de cuisine (1) pour la préparation au moins partiellement automatique d'aliments, comprenant :
- un dispositif de détection (240) pour détecter une résistance électrique au niveau de l'élément chauffant (210), dans lequel l'élément chauffant (210) est intégré dans le récipient de mélange (2),
- un dispositif de commande (220) pour commander l'élément chauffant (210),
dans lequel le dispositif de commande (220) est connecté électriquement au dispositif de détection (240) pour effectuer la commande sur la base de la détection de la résistance,
dans lequel le système de chauffage (200) est configuré pour exécuter un procédé selon l'une quelconque des revendications précédentes.

7. Robot de cuisine (1) selon la revendication 6,
**caractérisé en ce que**
l'élément chauffant (210) est intégré dans un fond (2.1) du récipient de mélange (2) du robot de cuisine (1) et s'étend à plat dans celui-ci pour chauffer un milieu (20) dans le récipient de mélange (2), de sorte qu'une résistance électrique de l'élément chauffant (210) est spécifique à une température du milieu (20) dans le récipient de mélange (2) et/ou que l'élément chauffant (210) est conçu comme un élément chauffant à couche épaisse (210).

8. Robot de cuisine (1) selon l'une quelconque des revendications précédentes 6 ou 7,
**caractérisé en ce que**
le dispositif de détection (240) comprend :
- un dispositif de mesure de tension (241) pour mesurer une tension électrique au niveau de l'élément chauffant (210),
- un dispositif de mesure de courant (242) pour mesurer un courant électrique au niveau de l'élément chauffant (210),
- un dispositif d'évaluation (243) pour détecter une résistance électrique au niveau de l'élément chauffant (210) en évaluant des valeurs de détection du dispositif de mesure de tension (241) et du dispositif de mesure de courant (242), de sorte qu'au moins une valeur de résistance peut être déterminée afin de fournir l'au moins une valeur de résistance pour une opération de chauffage en fonction de la température de l'élément chauffant (210),
dans lequel l'opération de chauffage a lieu en tant que commande de température de l'élément chauffant (210) avec une température en tant que variable commandée.

9. Robot de cuisine (1) selon la revendication 8,
**caractérisé en ce que**
le dispositif de mesure de tension (241) comprend un redresseur actif, de sorte qu'une chute de tension au niveau des diodes (D) du dispositif de mesure de tension (241) peut être compensée au moins partiellement ou de manière prédominante.

10. Produit de programme informatique pour faire fonctionner un élément chauffant (210), le produit de programme informatique étant adapté pour initier l'exécution des étapes suivantes lorsqu'elles sont exécutées par un dispositif d'évaluation électronique (243) :
a) détecter, au moyen d'un dispositif de détection (240), une résistance électrique de l'élément chauffant (210) de manière à déterminer au moins une valeur de résistance,
b) exécuter, au moyen d'un dispositif de commande (220), une opération de chauffage sur l'élément chauffant (210) sur la base de la au moins une valeur de résistance déterminée pour exécuter l'opération de chauffage en fonction d'une température de l'élément chauffant (210),
dans lequel l'exécution du produit de programme informatique réalise un procédé selon l'une quelconque des revendications précédentes,
dans lequel l'opération de chauffage est effectuée en tant que commande de température de l'élément chauffant (210) avec la température en tant que variable commandée, et pendant l'opération de chauffage, la résistance est détectée de manière répétée selon l'étape a), dans lequel dans chaque cas la valeur de résistance est déterminée en comparant au moins une valeur mesurée de courant à partir d'une mesure de courant au niveau de l'élément chauffant (210) et au moins une valeur mesurée de tension à partir d'une mesure de tension au niveau de l'élément chauffant (210) l'une avec l'autre.
